# EUROPEAN PATENT APPLICATION

(11) **EP 2 159 502 A2**
(43) Date of publication of application: **03.03.2010**
(21) Application number: 09154097.1
(22) Date of filing: 02.03.2009
(51) Int. Cl.: F24F 11/00

(54) **communication method of air conditioner**

(30) Priority: 28.08.2008 KR 20080084316
(71) Applicant: Samsung Electronics Co., Ltd., Suwon-si Gyeonggi-do (KR)
(72) Inventor: Kim, Sung Hoon, Gyeonggi-do (KR); Myoung, Kwan Joo, Gyeonggi-do (KR)
(74) Representative: Grünecker, Kinkeldey, Stockmair & Schwanhäusser Anwaltssozietät

(57) **Abstract**

Disclosed is a method for performing data communication between at least one outdoor unit and a plurality of indoor units of an air conditioner. Data are divided into several groups according to a variation degree of the data and the data communication is performed through different communication schemes. The transmission rate of the data is improved and transmission time is reduced.

## Description

### BACKGROUND OF THE INVENTION

### 1. Field of the invention

The present invention relates to a communication method of an air conditioner. More particularly, the present invention relates to a method for performing data communication between at least one outdoor unit and a plurality of indoor units of an air conditioner.

### 2. Description of the Related Art

Recently, demands for an air conditioner, in which a plurality of indoor units having various shapes and capacities are connected to one or at least one outdoor unit to perform cooling or heating operations relative to a plurality of rooms in schools, companies or hospitals, have been increased.

In the air conditioner, data communication is achieved through a master-slave scheme, in which the outdoor unit mainly serves as a communication master and a plurality of indoor units and relays serve as communication slaves that respond to the call of the outdoor unit.

In addition, time can be assigned to each indoor unit such that the indoor unit may transmit data to the outdoor unit within a predetermined period of time (time-divisional scheme), or the indoor unit can instantly transmit data to the outdoor unit whenever the data are generated (event scheme).

However, as the size of the air conditioner becomes enlarged and the number of communication slaves connected to the communication master is increased, it takes much time to perform communication between the indoor unit and the outdoor unit.

The master-slave scheme requires the procedure of call and response, so that urgent data may not be instantly transmitted between the master and the slave. The time-divisional scheme must assign time to each indoor unit, so that transmission time may be prolonged as the number of indoor unit is increased.

Further, in the case of the event scheme, data collision may increase between the indoor units if the amount of data is increased, so that data transmission time may be increased as compared with other communication schemes and the data collision may remarkably increase as the number of the indoor units is increased.

### SUMMARY OF THE INVENTION

Accordingly, it is an aspect of the present invention to provide a communication method of an air conditioner, capable of allowing an indoor unit and an outdoor unit of the air conditioner to make data communication according to the amount of data.

Additional aspects and/or advantages of the invention will be set forth in part in the description which follows and, in part, will be apparent from the description, or may be learned by practice of the invention.

The foregoing and/or other aspects of the present invention are achieved by providing a method for performing data communication between at least one outdoor unit and a plurality of indoor units of an air conditioner, the method comprising: dividing data into first data and second data according to a variation degree of the data; and performing the data communication for the first data and second data through different communication schemes.

The first data are frequently variable data including sensor information, valve operation information, and compress operation information, and the second data are rarely variable data including information about added devices, operation information, system information and error message information.

The first data are periodically transmitted and the second data are non-periodically transmitted.

The data communication for the second data is performed between the outdoor unit and the indoor units after the data communication for the first data has been performed between the outdoor unit and the indoor units.

In addition, the data communication for the second data is performed between the outdoor unit and the indoor units after the data communication for the first data has been performed between the outdoor unit and one of the indoor units. At this time, the data communication is repeatedly performed relative to the indoor units to complete first data communication for the indoor units.

The first data can be periodically transmitted through a master-slave scheme, in which the outdoor unit serving as a communication master calls the indoor unit serving as a communication slave and the indoor unit transmits the first data in response to the call of the outdoor unit.

The first data can be periodically transmitted through a time-divisional scheme, in which the indoor unit transmits the first data to the outdoor unit according to time assigned to the indoor unit.

The first data can be periodically transmitted through a token-ring scheme, in which a token control signal is transferred to one of the indoor units, the indoor unit receiving the token control signal transmits the first data to the outdoor unit if the first data to be transmitted exist, and the indoor unit transmits the token control signal to a next indoor unit after transmitting the first data to the outdoor unit.

The second data can be non-periodically transmitted through an event scheme, in which the indoor units transmit the second data to the outdoor unit if the second data to be transmitted are generated.

According to present invention, the data are divided into several groups according to a variation degree of the data and the data communication is performed through different communication schemes, so that the transmission time is remarkably reduced as compared with a case where the data are transmitted through the same scheme. That is, the data are divided into frequently variable data and rarely variable data, such that the frequently variable data can be periodically transmitted and the rarely variable data can be non-periodically transmitted. Thus, the data communication can be efficiently performed between the outdoor unit and the indoor units, so that the transmission rate of the data can be improved and transmission time can be reduced.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a block view showing a schematic structure of an air conditioner according to an embodiment of the present invention;
FIG. 2 is a block view showing a detailed structure of an air conditioner according to an embodiment of the present invention;
FIG. 3 is a communication timing view of an air conditioner according to a first embodiment of the present invention;
FIG. 4 is a flowchart showing a communication procedure of an air conditioner according to a first embodiment of the present invention;
FIG. 5 is a communication timing view of an air conditioner according to a second embodiment of the present invention;
FIG. 6 is a flowchart showing a communication procedure of an air conditioner according to a second embodiment of the present invention;
FIG. 7 is a communication timing view of an air conditioner according to a third embodiment of the present invention;
FIG. 8 is a flowchart showing a communication procedure of an air conditioner according to a third embodiment of the present invention;
FIG. 9 is a communication timing view of an air conditioner according to a fourth embodiment of the present invention;
FIG. 10 is a flowchart showing a communication procedure of an air conditioner according to a fourth embodiment of the present invention;
FIG. 11 is a communication timing view of an air conditioner according to a fifth embodiment of the present invention;
FIG. 12 is a flowchart showing a communication procedure of an air conditioner according to a fifth embodiment of the present invention;
FIG. 13 is a communication timing view of an air conditioner according to a sixth embodiment of the present invention; and
FIG. 14 is a flowchart showing a communication procedure of an air conditioner according to a sixth embodiment of the present invention.

### DETAILED DESCRIPTION OF THE PREFERRED EMBODIMENTS

Reference will now be made in detail to the embodiments of the present invention, examples of which are illustrated in the accompanying drawings, wherein like reference numerals refer to the like elements. The embodiments are described below to explain the present invention by referring to the figures.

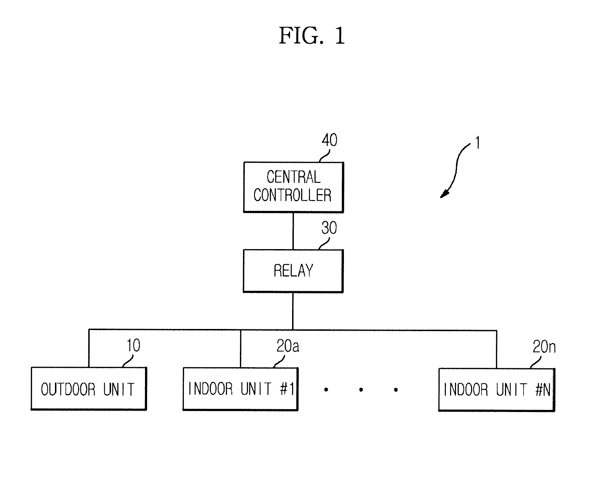

FIG. 1 is a block view showing a schematic structure of an air conditioner 1 according to an embodiment of the present invention. Referring to FIG. 1, the air conditioner 1 includes at least one outdoor unit 10, a plurality of indoor units 20, a relay 30 for relaying communication between the outdoor unit 10 and the indoor units 20, and a central controller 40 for controlling the operation of the air conditioner 1.

In addition, the outdoor unit 10, the indoor units 20, and the relay 30 perform data communication according to a predetermined communication protocol by transmitting or receiving various data, such as control commands and status information, through an RS-485 communication line.

The RS-485 communication line refers to a communication line based on the RS-485 communication standard. The RS-485 communication standard is one of interface standards for serial transmission used for a multi-point communication line. According to the RS-485 communication standard, a driver and a receiver having low impedance are used to assign 32 nodes to each line. In addition, the transmission distance may vary depending on the transmission rate, in which the maximum data transmission distance is 1200m.

In the case of large-size buildings, at least one outdoor unit 10 can be installed according to the number of indoor units 20. The outdoor unit 10 is connected to the central controller 40 so as to be controlled by the central controller 40. In addition, the outdoor unit 10 controls the indoor units 20 and a system manager can control the air conditioner 1 by manipulating the central controller 40.

The central controller 40 can control the air conditioner 1 by performing signal communication based on the RS-485 communication standard, and can be connected to the internet that is based on the Ethernet communication standard.

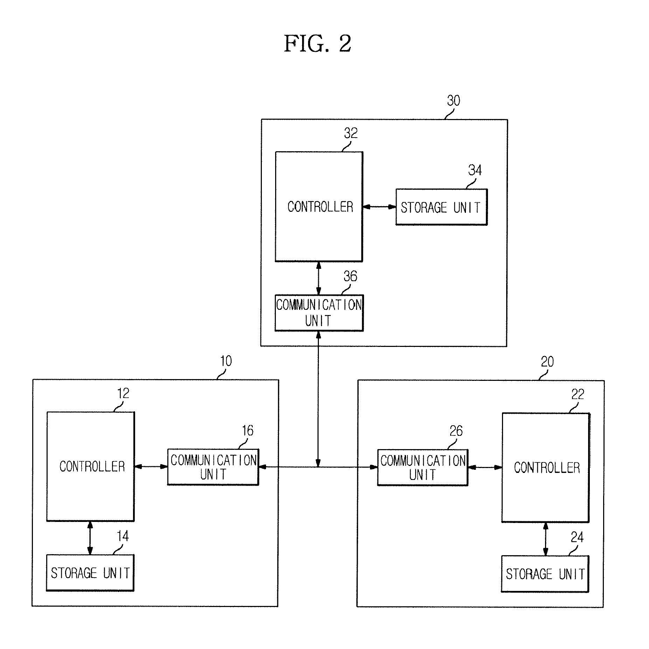

FIG. 2 is a block view showing a detailed structure of the air conditioner according to an embodiment of the present invention.

Referring to FIG. 2, the outdoor unit 10, the indoor units 20 and the relay 30 include controllers 12, 22, and 32 for controlling operations of the outdoor unit 10, the indoor units 20 and the relay 30, storage units 14, 24 and 34 for storing information about the air conditioner 1 and control information for the air conditioner 1, and communication units 16, 26 and 36 for enabling data communication, respectively. Hereinafter, description will be made with regard to the controller 12, the storage unit 14, and the communication unit 16 constituting the outdoor unit 10.

The controller 12 of the outdoor unit 10 controls the operation of the outdoor unit 10 and manages data communication when the outdoor unit 10 serves as a communication master in the master-slave scheme.

In more detail, the controller 12 calls the indoor units 20, which serve as communication slaves in a normal communication mode, in the sequence of addresses (1, 2, 3,..., and n) of the indoor units 20. If the indoor units 20 transmit data in response to the call, the controller 12 receives the data to perform data communication.

In addition, the controller 12 may handover the role of the communication master to the relay 30. That is, the controller 12 transmits/receives a master handover packet to handover the role of the communication master to the relay 30 or to regain the role of the communication master. Further, the controller 12 transmits/receives a slave handover packet to serve as the communication slave or the communication master.

If the indoor units 20 transmit data to the outdoor unit 10 according to the time assigned to the indoor units 20 in the time-divisional scheme, the controller 12 controls the communication unit 16 to receive the data from the indoor units 20.

In addition, the controller 12 transmits a token control signal to one of the indoor units 20 such that the outdoor unit 10 can make communication with the indoor units 20 through the token-ring scheme. Further, the controller 12 controls the communication unit 16 to receive data when the indoor units 20 transmit data to the outdoor unit 10 in the token-ring scheme or the event scheme.

The token-ring scheme refers to the communication scheme, in which a control signal called "token" is sequentially transferred to the indoor units and the indoor unit receiving the token control signal occupies the communication line to perform communication.

The storage unit 14 of the outdoor unit 10 stores an address list table for storing addresses of the indoor units 20 in the sequence of addresses (1, 2, 3, ..., and n) of the indoor units 20. The storage unit 14 is a storage medium capable of storing the address list table, such as a DRAM (direct random access memory), SDRAM (synchronous DRAM), RDRAM (rambus DRAM), DDRAM (double rate DRAM), or SRAM (static random access memory).

The communication unit 16 of the outdoor unit 10 transmits/receives the master handover packet and the slave handover packet, or receives the data transmitted from the indoor units 20.

Hereinafter, description will be made with regard to the controller 22, the storage unit 24, and the communication unit 26 constituting the indoor unit 20.

The controller 22 of the indoor unit 20 controls the operation of the indoor unit 20 and divides the data into several groups to perform data communication through various schemes.

In more detail, the controller 22 divides the data into first and second data according to the variation degree of the data, in which the first data are used for periodic communication and the second data are used for non-periodic communication. At this time, the first data are frequently variable data including sensor information, valve operation information and a compressor operation information, and the second data are rarely variable data including information about added devices, operation information, system information, and error message information.

The sensor information is obtained from an internal temperature sensor, an external temperature sensor, and the like, the valve operation information includes on/off information and an opening degree of a valve, and the compressor operation information represents the present operational state of the compressor, such as an RPM of a motor of the compressor. In addition, the information about the added devices refers to information about the indoor unit 20 that is newly added to the air conditioner 1, the operation information refers to on/off information of the indoor unit 20, the system information refers to version information of a controller 22, such as a microcontroller unit, and the error message information refers to message information about error identification codes (for instance, No. 1: overcurrent, No. 2: lack of coolant, and the like).

The first data, which are frequently variable data, are periodically transmitted and the second data, which are rarely variable data, are non-periodically transmitted. If the first data, which require frequent update, are non-periodically transmitted, time delay may occur due to data collision, so it takes much time to transmit the data. In addition, if the second data, which do not require frequent update, are periodically transmitted, transmission time may be prolonged due to transmission of unnecessary data. If the data transmission time is prolonged, the control operation may not be precisely performed.

The master-slave scheme can be adopted to periodically transmit the first data.

According to the master-slave scheme, the outdoor unit 10 serving as the communication master calls the indoor units 20 according to the sequence of the addresses of the indoor units 20, and the controller 22 of the indoor unit 20 controls the indoor units 20 to transmit the first data in response to the call of the outdoor unit 10.

In addition, the time-divisional scheme can be adopted to periodically transmit the first data.

According to the time-divisional scheme, the controller 22 counts a time to determine whether the time has reached a predetermined time assigned to the indoor unit 20. If the time has reached the assigned time, the controller 22 transmits the first data to the outdoor unit 10 such that the first data can be periodically transmitted to the outdoor unit 10.

Further, the token-ring scheme can be adopted to periodically transmit the first data. According to the token-ring scheme, if the token control signal is transmitted to the controller 22, the controller 22 determines whether there are first data to be transmitted to the outdoor unit 10. If there are first data to be transmitted to the outdoor unit 10, the controller 22 transmits the first data to the outdoor unit 10.

If the data transmission has been completed, the controller 22 transmits the token control signal to the next indoor unit 20. If there is no data to be transmitted, the controller 20 transmits the toke control signal to the indoor unit 20 having the address after the next indoor unit 20.

Meanwhile, the event scheme can be adopted to non-periodically transmit the second data. According to the event scheme, the controller 22 determines whether there are second data to be transmitted. If there are second data to be transmitted, the controller 22 transmits the second data to the outdoor unit 10. Since the second data do not require frequent update, the controller 22 transmits the second data to the outdoor unit 10 whenever the second data are generated.

As described above, the frequently variable data are periodically transmitted and the rarely variable data are non-periodically transmitted, so that the data transmission rate can be improved and transmission time can be reduced as compared with a case in which the data are transmitted through the same scheme. In addition, the transmission time may not be remarkably increased even if the size of the air conditioner is enlarged.

Meanwhile, the storage unit 24 of the indoor unit 20 stores the addresses of the indoor unit 20 and the next indoor unit and stores a data table that represents the type of data and communication scheme thereof as shown in Table 1.

**Table 1**

| | Frequently variable data (first data) | Rarely variable data (second data) |
|---|---|---|
| Type of data | Sensor information Valve operation information Compressor operation information | Information about added devices Operation information System information Error message information |
| Communication scheme | Master-slave scheme Time-divisional scheme Token-ring scheme | Event scheme |

As shown in Table 1, the storage unit 24 of the indoor unit 20 stores the first data, which are frequently variable data, and the second data, which are rarely variable data, and stores the master-slave scheme, the time-divisional scheme, and the token-ring scheme as a communication scheme for the first data. In addition, the storage unit 24 of the indoor unit 20 stores the event scheme as a communication scheme for the second data.

Further, the storage unit 24 stores time assigned to each indoor unit 20 for the time-divisional scheme.

The communication unit 26 receives the call from the outdoor unit 10, or transmits/receives the first and second data of the indoor unit 20.

If the relay 30 serves as the communication master in the master-slave scheme, the controller 32, the storage unit 34 and the communication unit 36 of the relay 30 may operate similarly to the controller 12, the storage unit 14 and the communication unit 16 of the outdoor unit 10. If the relay 30 serves as the communication slave in the master-slave scheme, the controller 32, the storage unit 34 and the communication unit 36 of the relay 30 may operate similarly to the controller 22, the storage unit 24 and the communication unit 26 of the indoor unit 20.

Although the embodiment of the present invention has been described with reference to the communication scheme among the outdoor unit, the indoor units and the relay, the above communication scheme is also applicable between devices, such as a coolant separator and a central controller.

Hereinafter, the communication procedure of the air conditioner having the above structure will be described.

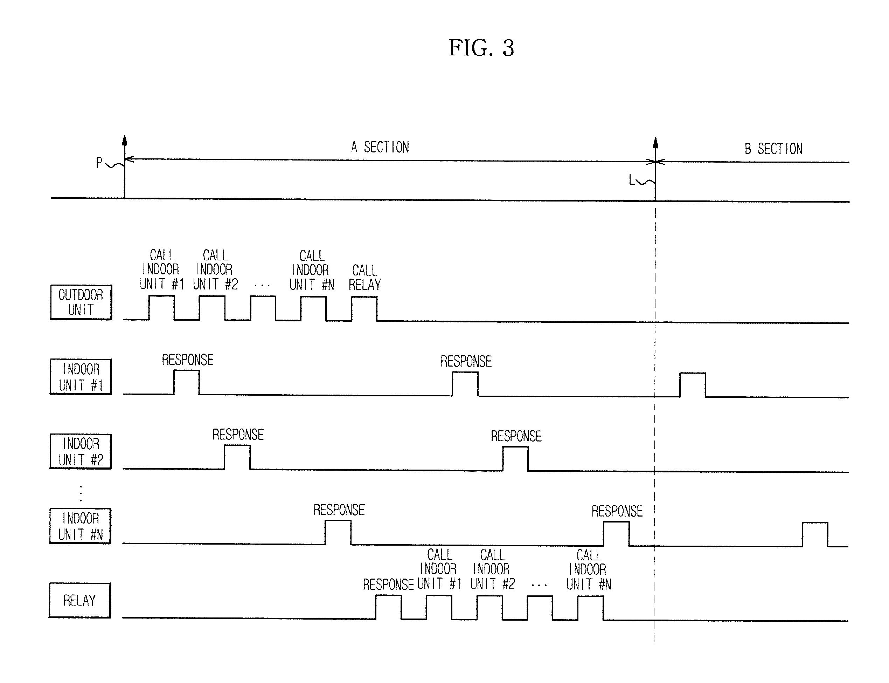

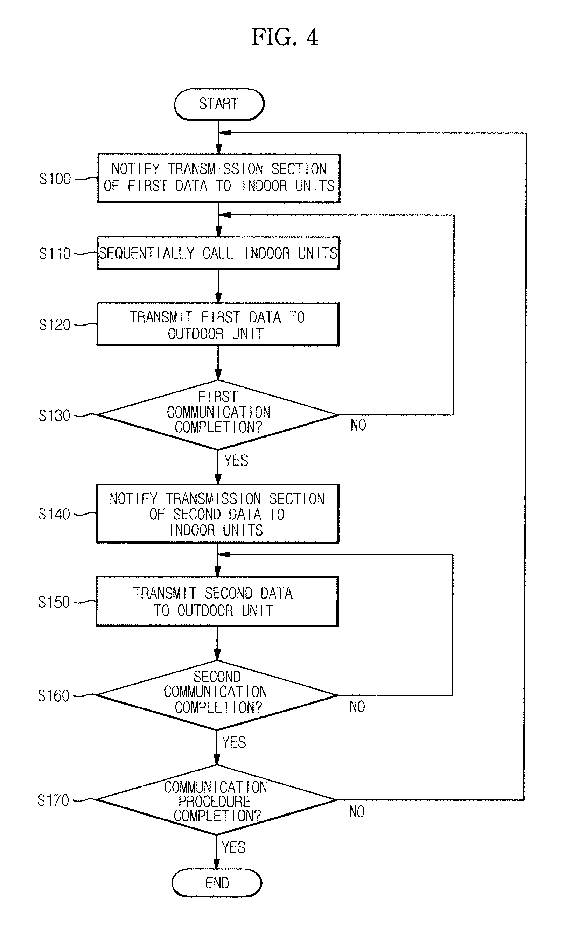

FIG. 3 is a communication timing view of an air conditioner according to a first embodiment of the present invention, in which an A section represents the master-slave scheme and a B section represents the event scheme, and FIG. 4 is a flowchart showing the communication procedure of the air conditioner according to the first embodiment of the present invention.

Referring to FIGS. 3 and 4, the outdoor unit 10 transmits a first notification signal P to a plurality of indoor units 20a to 20n to notify the transmission section (A section) of the first data (S100). The first data are frequently variable data including the sensor information, the valve operation information, and the compressor operation information.

After that, the outdoor unit 10 calls the indoor unit #1 20a (S110), so that the indoor unit #1 20a transmits the first data to the outdoor unit 10 in response to the call of the outdoor unit 10 (S120). Then, the outdoor unit 10 calls the next indoor unit #2 20b (S110), so that the indoor unit #2 20b transmits the first data to the outdoor unit 10 in response to the call of the outdoor unit 10 (S120).

Then, it is determined whether first communication for the first data has been completed between the outdoor unit 10 and the indoor units 20a to 20n through the master-slave scheme (S130).

If it is determined in step S130 that the first communication for the first data has been completed, the outdoor unit 10 transmits a second notification signal L to a plurality of indoor units 20a to 20n to notify the transmission section (B section) of the second data (S140). The second data are rarely variable data including the information about added devices, the operation information, the system information, and the error message information.

Then, the indoor units 20a to 20n determine whether the second data to be transmitted are generated. If the second data are generated, the indoor units 20a to 20n transmit the second data to the outdoor unit 10 to perform second communication (S150). For instance, the indoor units 20 determine whether there are devices that have been newly added and transmit the information about the added devices to the outdoor unit 10 if the added devices exist.

After step S150, it is determined whether the second communication between the outdoor unit 10 and the indoor units 20a to 20n has been completed through the event scheme (S160). If the second communication has been completed, it is determined whether the communication procedure has been completed (S170). If it is determined in step S170 that the communication procedure has been completed, the communication process ends, this means that the operation of the air conditioner 1 is stopped.

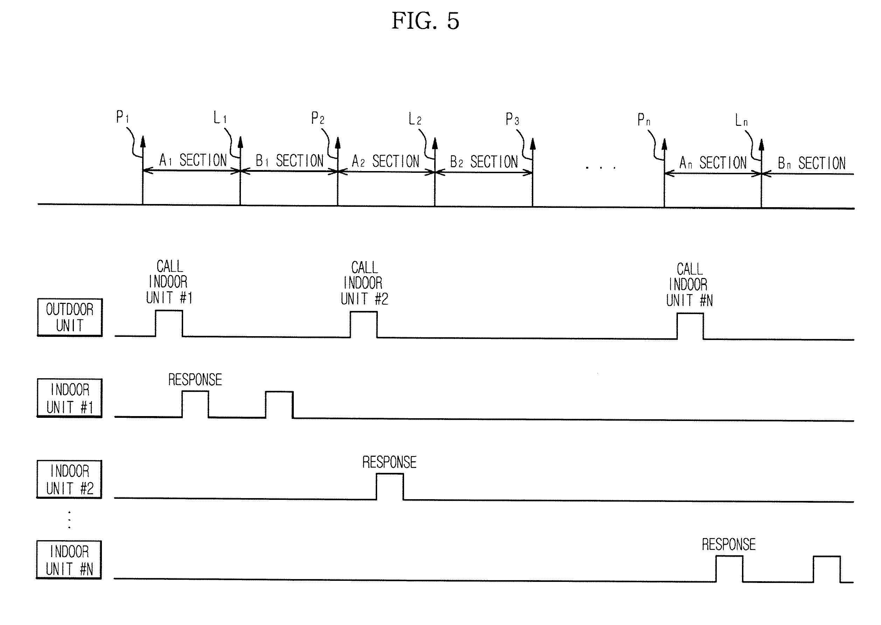

Although FIG. 3 shows that the communication for the first data is performed between the outdoor unit and the indoor units through the master-slave scheme in the A section, and then the communication for the second data is performed between the outdoor unit and the indoor units through the event scheme in the B section, as shown in FIG. 5, the communication for the second data can be performed between the outdoor unit and the indoor units through the event scheme after the communication for the first data has been performed between the outdoor unit and one of the indoor units through the master-slave scheme.

FIG. 5 is a communication timing view of an air conditioner according to a second embodiment of the present invention, in which A₁ to An sections represent the master-slave scheme and B₁ to Bₙ sections represent the event scheme, and

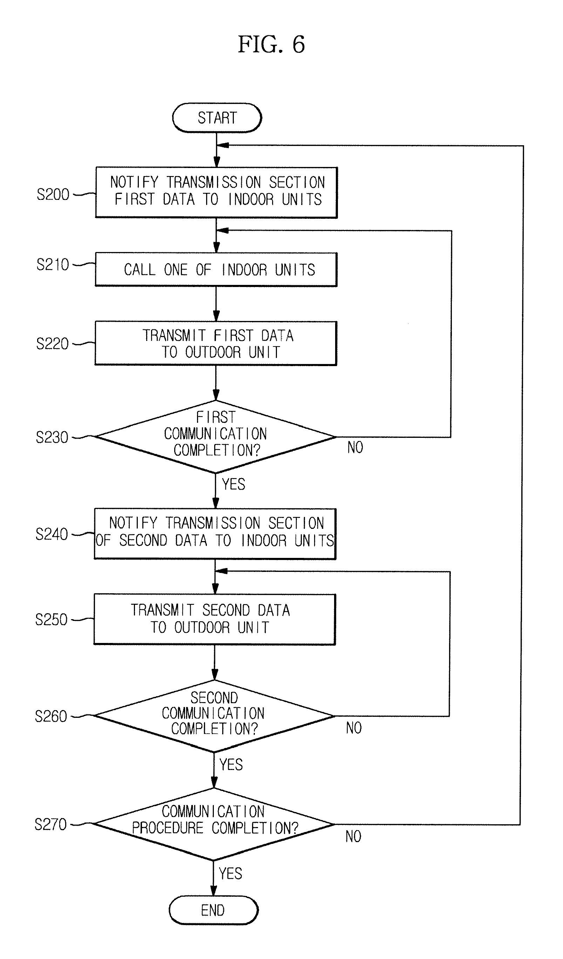

FIG. 6 is a flowchart showing a communication procedure of an air conditioner according to a second embodiment of the present invention.

Referring to FIGS. 5 and 6, the outdoor unit 10 transmits a first notification signal P₁ to a plurality of indoor units 20a to 20n to notify the transmission section (A₁ section) of the first data (S200).

Then, the outdoor unit 10 calls one of the indoor units, for instance, the indoor unit #1 20a (S210), so that the indoor unit #1 20a transmits the first data to the outdoor unit 10 in response to the call of the outdoor unit 10 (S220). After that, it is determined whether first communication for the first data has been completed between the outdoor unit 10 and the indoor unit #1 20a through the master-slave scheme (S230).

If it is determined in step S230 that the first communication for the first data has been completed between the outdoor unit 10 and the indoor unit #1 20a, the outdoor unit 10 transmits a second notification signal L₁ to all indoor units 20a to 20n to notify the transmission section B₁ of the second data (S240).

Then, the indoor units 20a to 20n determine whether the second data to be transmitted exist in the transmission section B₁. If the second data exist, the indoor units 20a to 20n transmit the second data to the outdoor unit 10 to perform second communication (S250). Then, it is determined whether the second communication between the outdoor unit 10 and the indoor units 20a to 20n has been completed through the event scheme (S260).

If the communication procedure has not been completed although the second communication between the outdoor unit 10 and the indoor units 20a to 20n has been completed through the event scheme in the transmission section B₁, the outdoor unit 10 transmits a third notification signal P₂ to a plurality of indoor units 20a to 20n to notify the transmission section (A₂ section) of the first data (S200).

Then, in the transmission section A₂, the outdoor unit 10 calls one of the indoor units, for instance, the indoor unit #2 20b (S210), so that the indoor unit #2 20b transmits the first data to the outdoor unit 10 in response to the call of the outdoor unit 10 (S220). After that, if the first communication for the first data has been completed between the outdoor unit 10 and the indoor unit #2 20b through the master-slave scheme (see, "yes" in step S230), the outdoor unit 10 transmits a fourth notification signal L₂ to a plurality of indoor units 20a to 20n to notify the transmission section (B₂ section) of the second data (S240).

Then, the indoor units 20a to 20n determine whether the second data to be transmitted exist in the transmission section B₂. If the second data do not exist in the transmission section B₂, the second data are not transmitted to the outdoor unit 10. The above procedure may repeat in the transmission sections A₁ to Aₙ and B₁ to Bₙ until the communication procedure has been completed.

As described above, according to the second embodiment of the present invention, the indoor units are communicated with the outdoor unit through the master-slave scheme and then communicated with the outdoor unit through the event scheme similarly to the communication scheme shown in FIG. 3. At this time, the first data are periodically transmitted to the outdoor unit and the second data, which are rarely variable data to be transmitted to the outdoor unit, can be rapidly transmitted to the outdoor unit as compared with a case in which the second data are transmitted after the first data of all indoor unit have been transmitted, so that the data communication can be efficiently controlled.

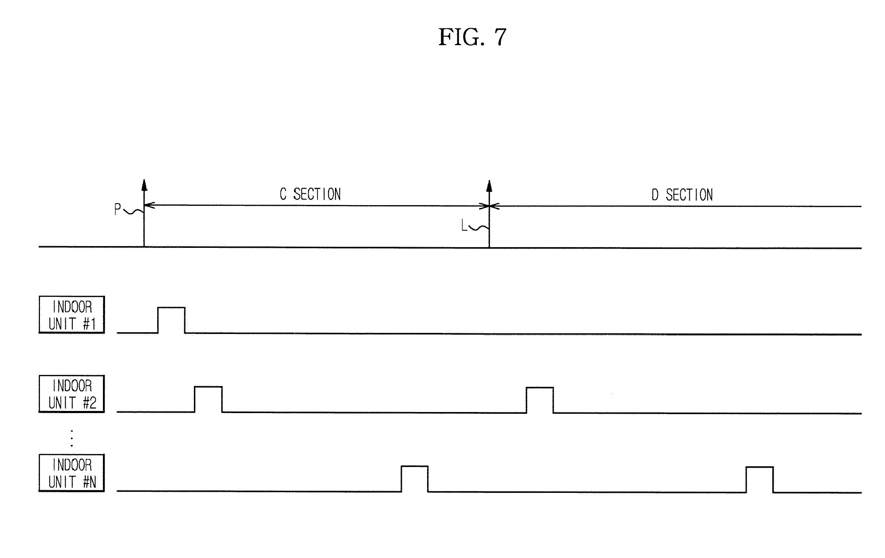

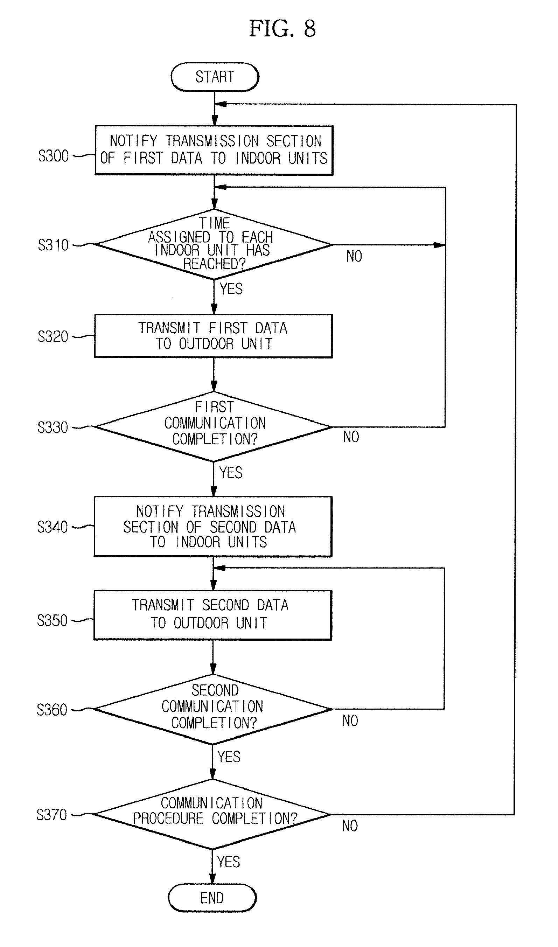

FIG. 7 is a communication timing view of an air conditioner according to a third embodiment of the present invention, in which a C section represents the time-divisional scheme and a D section represents the event scheme, and FIG. 8 is a flowchart showing a communication procedure of an air conditioner according to a third embodiment of the present invention.

Referring to FIGS. 7 and 8, the outdoor unit 10 transmits a first notification signal P to a plurality of indoor units 20a to 20n to notify the transmission section (C section) of the first data (S300).

Then, the indoor unit #1 20a determines whether a time has reached a predetermined time assigned to the indoor unit #1 20a (S310), and transmits the first data to the outdoor unit 10 if the time has reached the predetermined time assigned to the indoor unit #1 20a (S320).

The indoor units 20a #1 to 20a #N determine whether a time has reached a predetermined time assigned thereto and then transmit the first data to the outdoor unit 10 if the time has reached the predetermined time assigned thereto. Then, it is determined whether all indoor units have performed the first communication for the first data through the time-divisional scheme (S330).

If the first communication for the first data has been completed through the time-divisional scheme, the outdoor unit 10 transmits a second notification signal L to a plurality of indoor units 20a to 20n to notify the transmission section (D section) of the second data (S340).

After that, the indoor units 20a to 20n determine whether the second data to be transmitted exist in the transmission section D. If the second data exist, the indoor units 20a to 20n transmit the second data to the outdoor unit 10 to perform second communication (S350).

After step S350, it is determined whether the second communication between the outdoor unit 10 and all indoor units 20a to 20n has been completed through the event scheme (S360). If the second communication has been completed, it is determined whether the communication procedure has been completed (S370). If it is determined in step S370 that the communication procedure has been completed, the communication process ends.

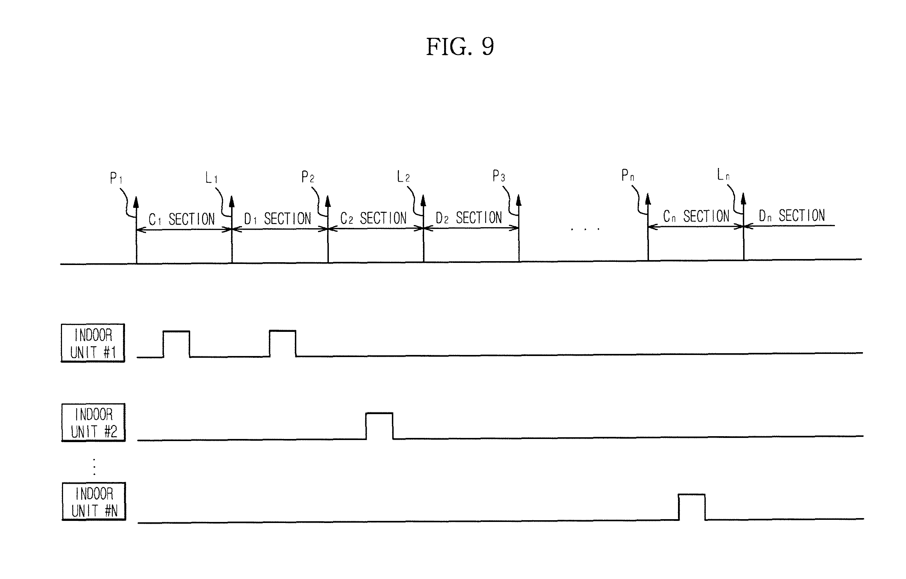

Although FIG. 7 shows that the first data are transmitted between the outdoor unit and the indoor units through the time-divisional scheme in the C section, and then the second data are transmitted between the outdoor unit and the indoor units through the event scheme in the D section, as shown in FIG. 9, the communication for the second data can be performed between the outdoor unit and the indoor units through the event scheme after the communication for the first data has been performed between the outdoor unit and one of the indoor units through the time-divisional scheme.

FIG. 9 is a communication timing view of an air conditioner according to a fourth embodiment of the present invention, in which C₁ to Cₙ sections represent the time-divisional scheme and D₁ to Dₙ sections represent the event scheme, and

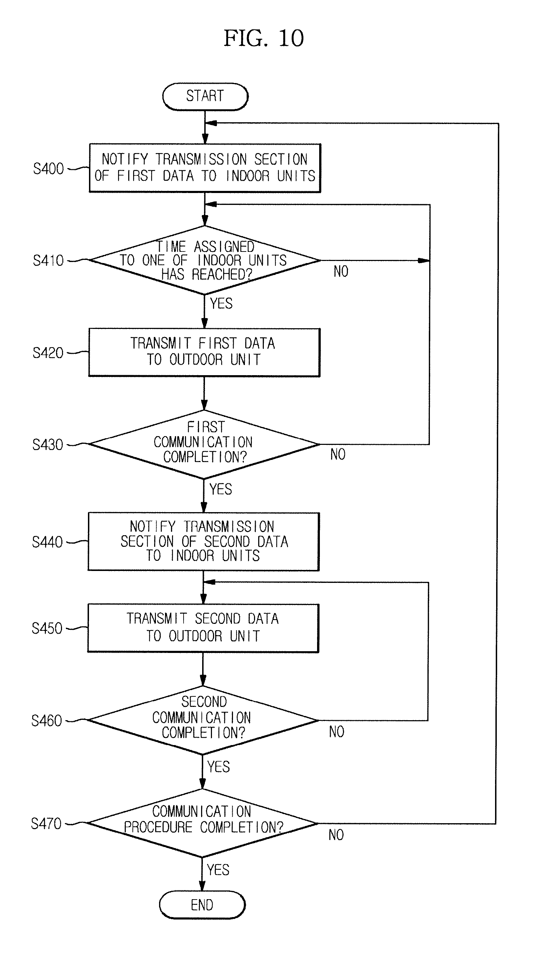

FIG. 10 is a flowchart showing a communication procedure of an air conditioner according to a fourth embodiment of the present invention.

Referring to FIGS. 9 and 10, the outdoor unit 10 transmits a first notification signal P₁ to a plurality of indoor units 20a to 20n to notify the transmission section (C₁ section) of the first data (S400).

Then, one of the indoor units 20, that is, the indoor unit #1 20a determines whether a time has reached the predetermined time assigned to the indoor unit #1 20a in the transmission section C₁ (S410), and transmits the first data to the outdoor unit 10 if the time has reached the predetermined time assigned to the indoor unit #1 20a (S420). Then, it is determined whether the first communication for the first data has been completed between the outdoor unit 10 and the indoor unit #1 20a through the time-divisional scheme (S430).

If the first communication for the first data has been completed between the outdoor unit 10 and the indoor unit #1 20a through the time-divisional scheme, the outdoor unit 10 transmits a second notification signal L₁ to a plurality of indoor units 20a to 20n to notify the transmission section (D₁ section) of the second data (S440).

Then, the indoor units 20a to 20n determine whether the second data to be transmitted exist in the transmission section D₁. If the second data exist, the indoor units 20a to 20n transmit the second data to the outdoor unit 10 to perform the second communication (S450).

After step S450, it is determined whether the second communication between the outdoor unit 10 and all indoor units 20a to 20n has been completed through the event scheme (S460). If it is determined in step S460 that the communication procedure has not been completed although the second communication between the outdoor unit 10 and the indoor units 20a to 20n has been completed through the event scheme, the outdoor unit 10 transmits a third notification signal P₂ to a plurality of indoor units 20a to 20n to notify the transmission section (C₂ section) of the first data (S400).

In the transmission section C₂, the indoor unit #2 20b determines whether a time has reached a predetermined time assigned to the indoor unit #2 20b (S410), and transmits the first data to the outdoor unit 10 if the time has reached the predetermined time assigned to the indoor unit #2 20b, thereby performing the first communication (S420).

Then, if the first communication for the first data has been completed between the outdoor unit 10 and the indoor unit #2 20b through the time-divisional scheme (see, "yes" in step 430), the outdoor unit 10 transmits a fourth notification signal L₂ to a plurality of indoor units 20a to 20n to notify the transmission section (D₂ section) of the second data (S440).

After that, the indoor units 20a to 20n determine whether the second data to be transmitted exist in the transmission section D₂. If the second data do not exist, the second data are not transmitted to the outdoor unit 10. The above procedure may repeat in the transmission sections C₁ to Cₙ and D₁ to Dₙ until the communication procedure has been completed.

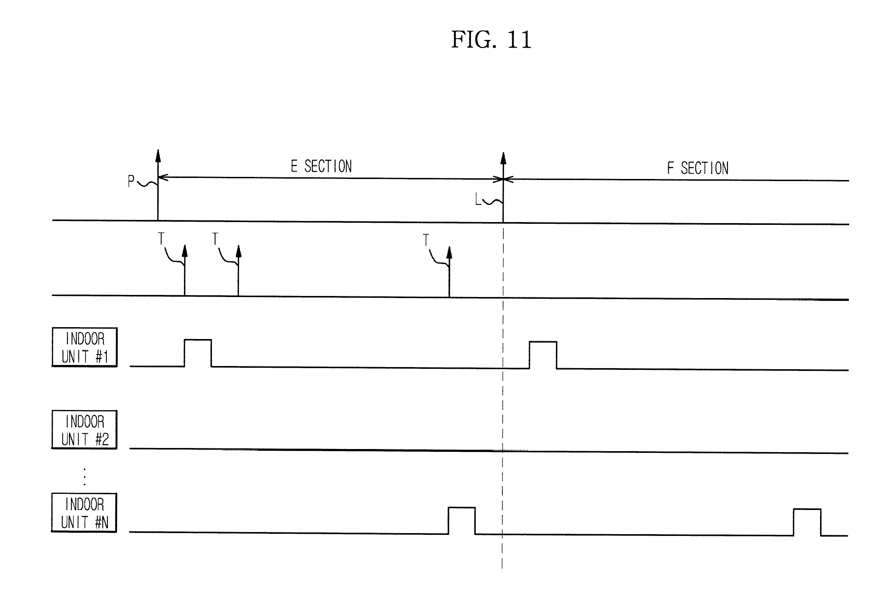

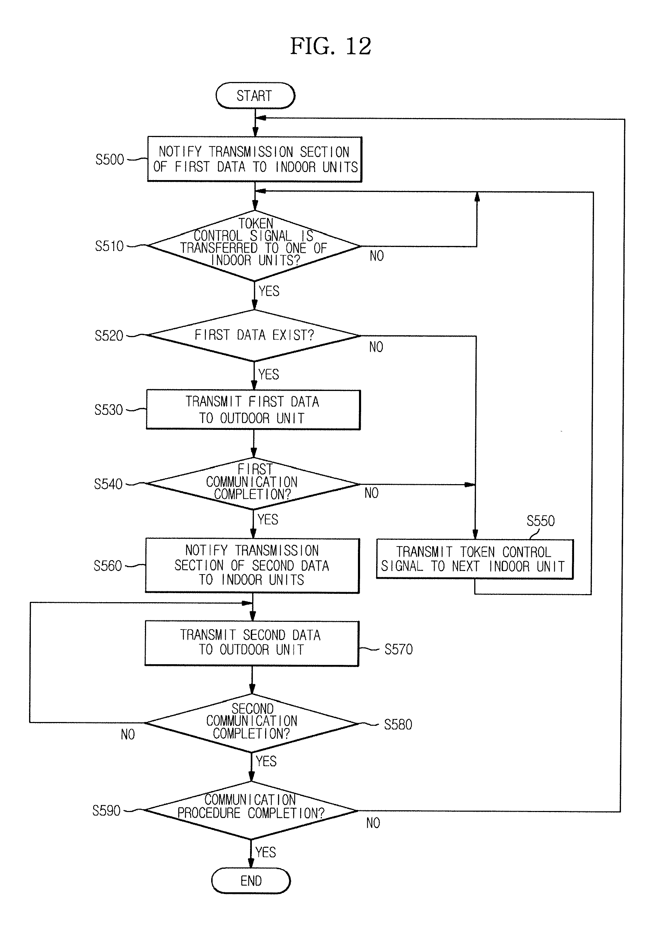

FIG. 11 is a communication timing view of an air conditioner according to a fifth embodiment of the present invention, in which an E section represents the token-ring scheme and an F sections represents the event scheme, and FIG. 12 is a flowchart showing a communication procedure of an air conditioner according to a fifth embodiment of the present invention.

Referring to FIGS. 11 and 12, the outdoor unit 10 transmits a first notification signal P to a plurality of indoor units 20a to 20n to notify the transmission section (E section) of the first data (S500).

Then, the outdoor unit 10 calls one of the indoor units 20, that is, the indoor unit #1 20a and transmits a token control signal T to the indoor unit #1 20a. The indoor unit #1 20a checks whether the token control signal T is transmitted thereto from the outdoor unit 10 (S51 0). If the token control signal T is transmitted to the indoor unit #1 20a from the outdoor unit 10, the indoor unit #1 20a determines whether the first data to be transmitted exist (S520).

If the first data to be transmitted exist, the indoor unit #1 20a transmits the first data to the outdoor unit 10 (S530). When the transmission for the first data has been completed between the outdoor unit 10 and the indoor unit #1 20a, the indoor unit #1 20a transmits the token control signal T to the next indoor unit #2 20b such that the data communication of the first data can be performed between the outdoor unit 10 and the next indoor unit #2 20b.

The above communication procedure may repeat with respect to all indoor units 20a #1 to 20a #N. Then, it is determined whether the first communication of the first data has been completed between the outdoor unit 10 and all indoor units 20a to 20n through the token-ring scheme (S540).

If it is determined in step S540 that the first communication has been completed through the token-ring scheme, the outdoor unit 10 transmits a second notification signal L to a plurality of indoor units 20a to 20n to notify the transmission section (F section) of the second data (S560).

Then, the indoor units 20a to 20n determine whether the second data to be transmitted exist. If the second data to be transmitted exist, the indoor units 20a to 20n transmit the second data to the outdoor unit 10 to perform the second communication through the event scheme (S570).

After step S570, it is determined whether the second communication between the outdoor unit 10 and all indoor units 20a to 20n has been completed through the event scheme (S580). If it is determined in step S580 that the second communication has been completed, it is determined whether the communication procedure has been completed (S590). If the communication procedure has been completed, the operation of the air conditioner 1 is stopped.

Meanwhile, if there are no first data to be transmitted in step S520, the indoor unit #1 20a transmits the token control signal T to the next indoor unit #2 20b such that the data communication of the first data can be performed between the outdoor unit 10 and the next indoor unit #2 20b through the token-ring scheme (S550).

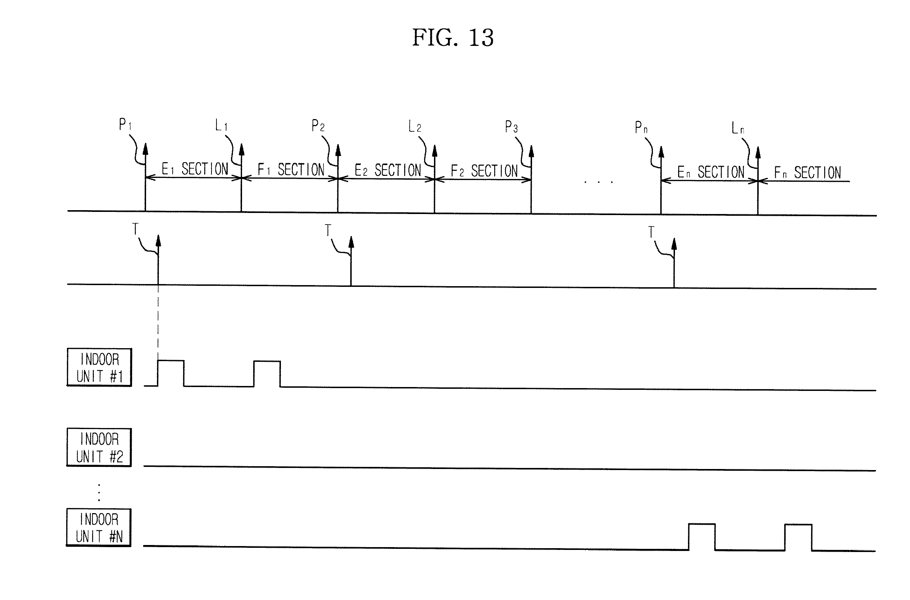

Although FIG. 11 shows that the first data are transmitted between the outdoor unit and the indoor units through the token-ring scheme in the E section, and then the second data are transmitted between the outdoor unit and the indoor units through the event scheme in the F section, as shown in FIG. 13, the communication for the second data can be performed between the outdoor unit and the indoor units through the event scheme after the communication for the first data has been performed between the outdoor unit and one of the indoor units through the token-ring scheme.

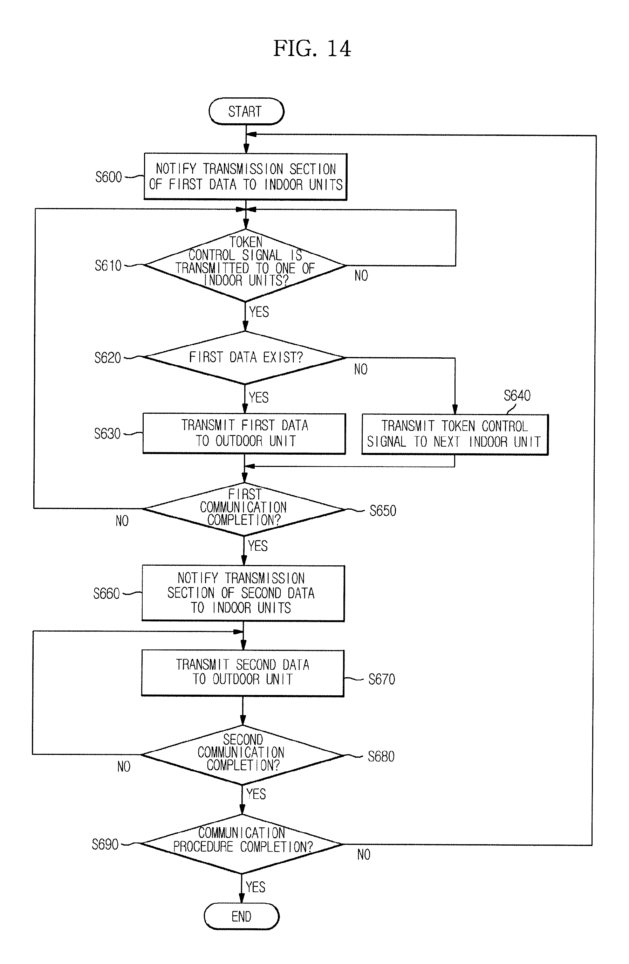

FIG. 13 is a communication timing view of an air conditioner according to a sixth embodiment of the present invention, in which E₁ to Eₙ sections represent the token-ring scheme and F₁ to Fₙ sections represent the event scheme, and FIG. 14 is a flowchart showing a communication procedure of an air conditioner according to a sixth embodiment of the present invention.

Referring to FIGS. 13 and 14, the outdoor unit 10 transmits a first notification signal P₁ to a plurality of indoor units 20a to 20n to notify the transmission section (E₁ section) of the first data (S600).

In the transmission section E₁, one of the indoor units, that is , the indoor unit #1 20a checks whether the token control signal T is transmitted thereto from the outdoor unit 10 (S610). If the token control signal T is transmitted to the indoor unit #1 20a from the outdoor unit 10, the indoor unit #1 20a determines whether the first data to be transmitted exist (S620). If the first data to be transmitted exist, the indoor unit #1 20a transmits the first data to the outdoor unit 10 (S630).

After step S630, it is determined whether the first communication for the first data has been completed between the outdoor unit 10 and the indoor unit #1 20a through the token-ring scheme (S640). If the first communication for the first data has been completed between the outdoor unit 10 and the indoor unit #1 20a through the token-ring scheme (see, "yes" in step S640), the outdoor unit 10 transmits a second notification signal L₁ to a plurality of indoor units 20a to 20n to notify the transmission section (F₁ section) of the second data (S660).

Then, the indoor units 20a to 20n determine whether the second data to be transmitted exist. If the second data to be transmitted exist, the indoor units 20a to 20n transmit the second data to the outdoor unit 10 to perform the second communication (S670).

After step S670, it is determined whether the second communication between the outdoor unit 10 and all indoor units 20a to 20n has been completed through the event scheme (S680). If it is determined in step S680 that the second communication for the second data has been completed through the event scheme, it is determined whether the communication procedure has been completed (S690).

Meanwhile, if there are no first data to be transmitted in step S620, the indoor unit #1 20a transmits the token control signal T to the next indoor unit #2 20b. Alternatively, the indoor unit #1 20a transmits the token control signal T back to the outdoor unit 10 in such a manner that the outdoor unit 10 can transmit the token control signal T to the next indoor unit #2 20b.

The indoor unit #1 20a can transmit the token control signal T to the next indoor unit #2 20b after the first and second communications have been completed between the outdoor unit 10 and the indoor unit #1 20a. That is, the transmission of the token control signal to the next indoor unit or the outdoor unit performed in step S640 can be carried out when step S690 is determined as "no".

As described above, the first communication for the first data is performed between the outdoor unit 10 and one of the indoor units through the token-ring scheme, and then the second communication for the second data is performed between the outdoor unit 10 and the indoor units through the event scheme. In addition, this communication process may repeat in the transmission sections E₁ to Eₙ and F₁ to Fₙ until the communication procedure has been completed.

Although few embodiments of the present invention have been shown and described, it would be appreciated by those skilled in the art that changes may be made in these embodiments without departing from the principles and spirit of the invention, the scope of which is defined in the claims and their equivalents.

## Claims

1. A method for performing data communication between at least one outdoor unit and a plurality of indoor units of an air conditioner, the method comprising:
dividing data into first data and second data according to a variation degree of the data; and
performing the data communication for the first data and second data through different communication schemes.

2. The method as claimed in claim 1, wherein the first data are frequently variable data including sensor information, valve operation information, and compress operation information.

3. The method as claimed in claim 1, wherein the second data are rarely variable data including information about added devices, operation information, system information and error message information.

4. The method as claimed in claim 1, wherein the first data are periodically transmitted and the second data are non-periodically transmitted.

5. The method as claimed in claim 2, wherein the data communication for the second data is performed between the outdoor unit and the indoor units after the data communication for the first data has been performed between the outdoor unit and the indoor units.

6. The method as claimed in claim 2, wherein the data communication for the second data is performed between the outdoor unit and the indoor units after the data communication for the first data has been performed between the outdoor unit and one of the indoor units.

7. The method as claimed in claim 6, wherein the data communication is repeatedly performed relative to the indoor units to complete first data communication for the indoor units.

8. The method as claimed in claim 4, wherein the first data are periodically transmitted through a master-slave scheme, in which the outdoor unit serving as a communication master calls the indoor unit serving as a communication slave and the indoor unit transmits the first data in response to the call of the outdoor unit.

9. The method as claimed in claim 4, wherein the first data are periodically transmitted through a time-divisional scheme, in which the indoor unit transmits the first data to the outdoor unit according to time assigned to the indoor unit.

10. The method as claimed in claim 4, wherein the first data are periodically transmitted through a token-ring scheme, in which a token control signal is transferred to one of the indoor units, the indoor unit receiving the token control signal transmits the first data to the outdoor unit if the first data to be transmitted exist, and the indoor unit transmits the token control signal to a next indoor unit after transmitting the first data to the outdoor unit.

11. The method as claimed in claim 4, wherein the second data are non-periodically transmitted through an event scheme, in which the indoor units transmit the second data to the outdoor unit if the second data to be transmitted are generated.

12. The method as claimed in claim 1, wherein the outdoor unit notifies the indoor units of transmission sections of first data that are frequently variable data, and the indoor unit periodically transmits the first data to the outdoor unit in the transmission section of the first data; and
the outdoor unit notifies the indoor units of transmission sections of second data that are rarely variable data, and the indoor unit non-periodically transmits the second data to the outdoor unit in the transmission section of the second data.
